# FASCICULE DE BREVET EUROPEEN

(11) **EP 3 798 455 B1**
(45) Date de publication et mention de la délivrance du brevet: **04.01.2023**
(21) Numéro de dépôt: 20196477.2
(22) Date de dépôt: 16.09.2020
(51) Int. Cl.: F16B 5/02, F16B 21/08

(54) **DISPOSITIF DE DECOUPLAGE THERMIQUE**
THERMISCHE ENTKOPPLUNGSVORRICHTUNG
THERMAL UNCOUPLING DEVICE

(30) Priorité: 24.09.2019 FR 1910540
(43) Date de publication de la demande: 31.03.2021
(73) Titulaire: A. Raymond et Cie, 38000 Grenoble (FR)
(72) Inventeur: MOUILLON, Romain, 38340 VOREPPE (FR)
(74) Mandataire: IP Trust

(56) Documents cités:
- DE-C1- 10 162 469
- DE-U1-202013 012 516
- GB-A- 1 413 004
- US-A1- 2010 050 401

## Description

### DOMAINE DE L'INVENTION

La présente invention concerne un dispositif de découplage thermique entre un premier élément et un deuxième élément ayant une température différente de celle du premier élément. Cette invention a notamment son intérêt dans le domaine automobile, et plus particulièrement dans celui de la fixation de pare-chocs.

### ARRIERE PLAN TECHNOLOGIQUE DE L'INVENTION

On connaît du document JP2012241886 un dispositif de fixation d'un pare-chocs à une surface métallique. Ce dispositif maintient un espace fixe entre le pare-chocs et la surface métallique afin d'isoler thermiquement le pare-chocs de la surface métallique. Toutefois, ce type de dispositif ne permet pas une dissipation efficace de la chaleur, et donc un bon découplage thermique entre le pare-chocs et la surface métallique, si ladite surface métallique atteint des températures importantes : cela est problématique, car le pare-chocs peut voir sa température augmenter de manière importante et se détériorer.

On connaît du document WO2006128676 un dispositif de découplage thermique entre deux pièces ayant des températures différentes. Ce dispositif par le biais d'éléments de dissipation permet de dissiper la chaleur de la pièce la plus chaude et ainsi réduire l'élévation en température de la deuxième pièce.

Le document GB1413004A divulgue un dispositif de fixation en matière plastique pour fixer un panneau 12 à un substrat 14. Une bride annulaire du dispositif se trouve entre le panneau et le substrat.

### OBJET DE L'INVENTION

Un but de l'invention est de proposer un dispositif de découplage thermique, permettant de dissiper la chaleur de la pièce la plus chaude et ainsi réduire l'élévation en température de la deuxième pièce, alternatif à ceux de l'état de la technique.

### BREVE DESCRIPTION DE L'INVENTION

En vue de la réalisation de ce but, l'objet de l'invention , définie par la revendication 1, propose un dispositif de découplage thermique entre un premier élément et un deuxième élément présentant une température différente de celle du premier élément, les deux éléments étant chacun munis d'une ouverture, le dispositif de découplage thermique comprenant :
- une tête présentant une surface supérieure destinée à venir en contact contre le premier élément et une surface inférieure destinée à venir en contact contre le deuxième élément, pour maintenir un espacement fixe entre le premier et le deuxième élément ;
- un pied destiné à traverser l'ouverture du deuxième élément et à fixer le dispositif de découplage thermique au deuxième élément
- un logement interne débouchant au niveau de la surface supérieure de la tête, et destiné à accueillir une vis traversant l'ouverture du premier élément, pour fixer le dispositif de découplage thermique au premier élément ;
la tête étant munie d'une pluralité d'ailettes de refroidissement transverses par rapport à un axe principal du dispositif de découplage thermique, la pluralité d'ailettes délimitant entre elles des zones de dissipation thermique.

Selon d'autres caractéristiques avantageuses et non limitatives de l'invention, prises seules ou selon toute combinaison techniquement réalisable :
- chaque ailette de refroidissement s'étend continument sur tout le pourtour de la tête ;
- le pied comprend une paire de pattes flexibles, dont les extrémités libres sont orientées vers la tête, chaque patte étant configurée pour se déformer lors de la traversée de l'ouverture du deuxième élément, l'extrémité libre de chaque patte flexible venant en appui contre une surface inférieure du deuxième élément, après la traversée de l'ouverture du deuxième élément, pour le fixer au dispositif de découplage thermique ;
- la tête comprend au moins deux entretoises disposées entre chaque ailette ;
- les entretoises, entre chaque ailette, sont disposées de manière symétrique par rapport à l'axe principal ;
- la surface supérieure de la tête appartient à une première ailette et au moins une entretoise, comprise entre la première ailette et une deuxième ailette directement située sous la première ailette, est une entretoise renforcée et possède une dimension latérale supérieure à celle des entretoises sous-jacentes ;
- l'entretoise renforcée possède une dimension radiale supérieure à celle des entretoises sous-jacentes ;
- la tête comprend au moins une nervure disposée entre chaque ailette;
- les nervures ont un profil incliné configuré pour que la dimension radiale des nervures augmente en se rapprochant de la surface supérieure de la tête ;
- le dispositif de découplage thermique est formé d'un matériau plastique résistant à des températures comprises entre 20° et 200°C.

### BREVE DESCRIPTION DES FIGURES

D'autres caractéristiques et avantages de l'invention ressortiront de la description détaillée de l'invention qui va suivre en référence aux figures annexées sur lesquels :

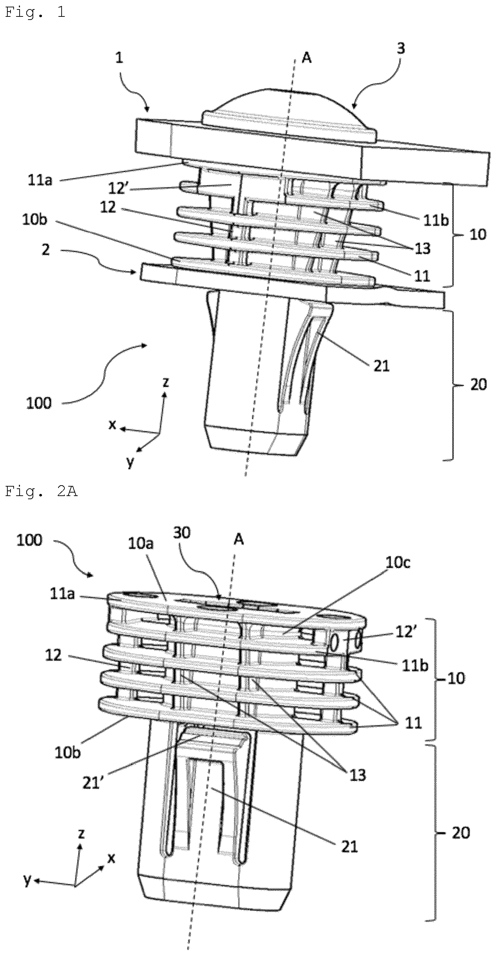

[Fig. 1] La figure 1 représente la mise en œuvre d'un dispositif de découplage thermique conforme à l'invention entre un premier élément et un deuxième élément ;
[Fig. 2A]

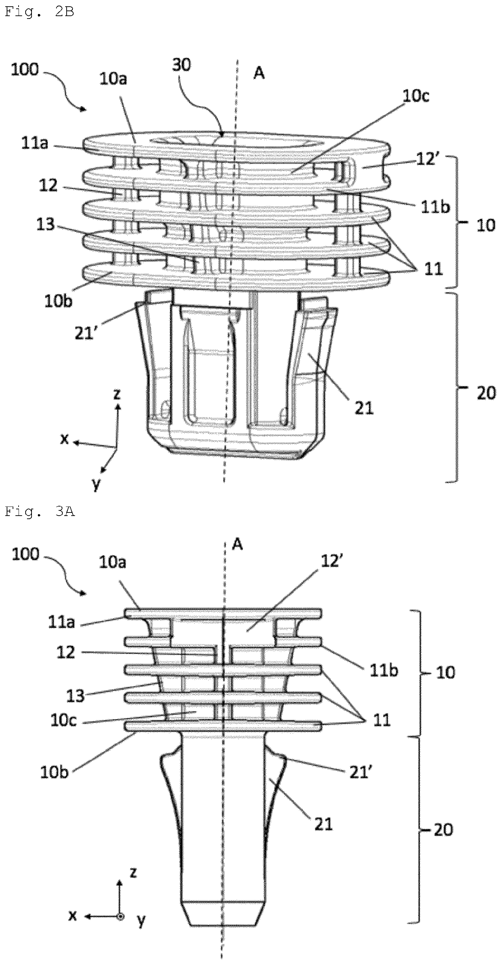

   [Fig. 2B] Les figures 2A et 2B représentent une vue d'ensemble d'un dispositif de découplage thermique respectivement conforme à un mode de réalisation de l'invention ;
[Fig. 3A]

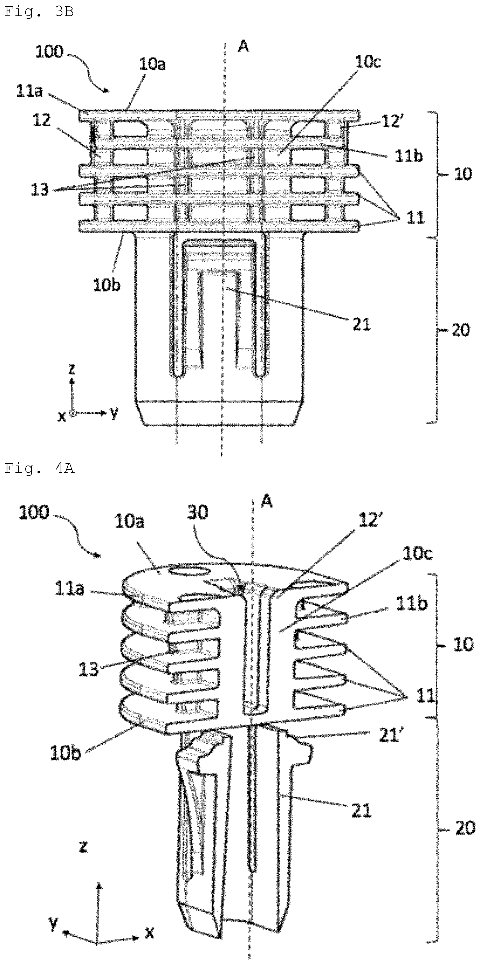

   [Fig. 3B] Les figures 3A et 3B représentent un dispositif de découplage thermique conforme à l'invention respectivement selon un plan (x,z) et (y,z) ;
[Fig. 4A]

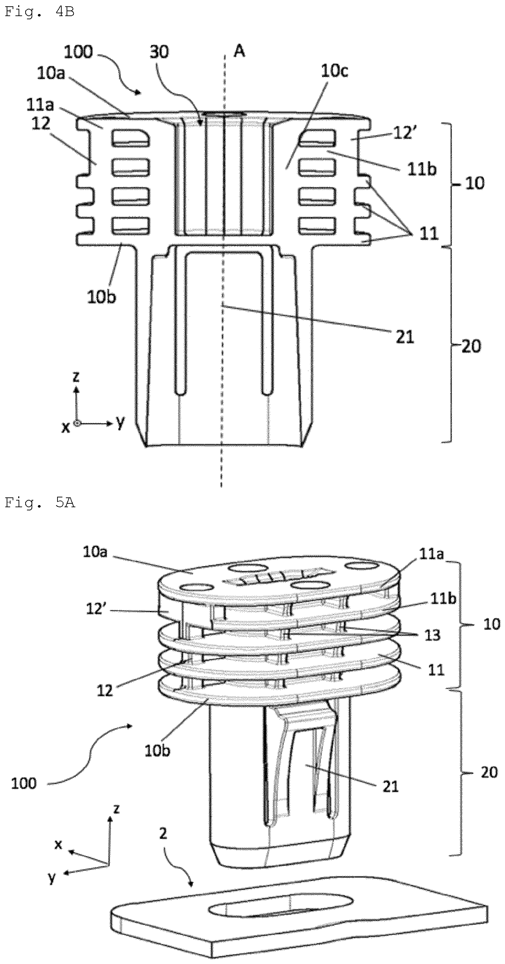

   [Fig. 4B] Les figures 4A et 4B représentent respectivement une coupe d'un dispositif de découplage thermique conforme à l'invention respectivement selon un plan (x,z) et (y,z) ;
[Fig. 5A]

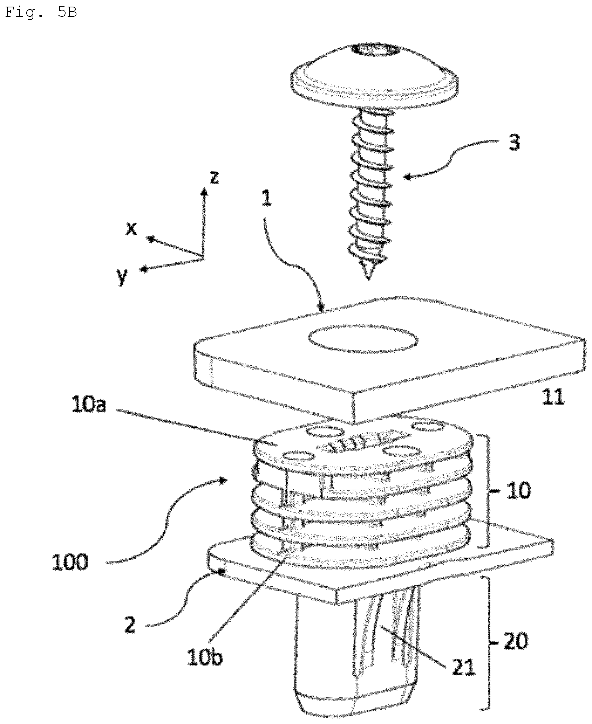

   [Fig. 5B] Les figures 5A, 5B représentent les étapes d'assemblage d'un dispositif de découplage thermique, conforme à l'invention, à un premier et deuxième élément.

### DESCRIPTION DETAILLEE DE L'INVENTION

Les figures sont des représentations schématiques qui, dans un objectif de lisibilité, ne sont pas à l'échelle.

### Présentation générale du dispositif de découplage thermique

La figure 1 représente la mise en œuvre d'un dispositif de découplage thermique 100 conforme à l'invention entre un premier élément 1 et un deuxième élément 2.

Le dispositif de découplage thermique 100 a pour but de réaliser un découplage thermique et d'assembler entre eux un premier élément 1 et un deuxième élément 2, le deuxième élément 2 présentant une température différente de celle du premier élément 1. Dans la suite de la description, nous considérerons que le deuxième élément 2 a une température plus importante que celle du premier élément 1 mais il est tout à fait possible que cela soit l'inverse. Le dispositif de découplage thermique 100 permet de dissiper la chaleur du deuxième élément 2 pour réduire l'élévation en température du premier élément 1 et ainsi éviter qu'il surchauffe et s'endommage.

Le premier élément 1 peut par exemple être un pare-chocs, et le deuxième élément 2 une surface métallique du moteur ayant une température avoisinant les 160°C. Le premier élément 1 et le deuxième élément 2 sont séparés par un espace, défini par le dispositif de découplage thermique 100, dans lequel circule un air ambiant, généralement autour des 40°C. Il est souhaitable que la température du premier élément 1 soit la plus basse possible. Cela se traduit généralement par une différence de plus de 100°C avec celle du premier élément 1.

Le premier élément 1 et le deuxième élément 2 sont chacun munis d'une ouverture destinée à coopérer avec le dispositif de découplage thermique 100, comme cela sera décrit plus loin.

### Description du dispositif de découplage thermique

En référence aux figures, un dispositif de découplage thermique 100 conforme à l'invention, présentant un axe principal A, comprend une tête 10, un pied 20 ainsi qu'un logement interne 30.

La tête 10 comprend un corps 10c et présente une surface supérieure 10a destinée à venir en contact contre le premier élément 1 ainsi qu'une surface inférieure 10b destinée à venir en contact contre le deuxième élément 2, pour maintenir un espacement fixe entre le premier 1 et le deuxième élément 2, par exemple de 10mm mais on peut également envisager un espacement plus important ou plus petit. Les termes « surface supérieure » et « surface inférieure » sont définies par rapport à l'axe principal A orienté du pied 20 vers la tête 10. Dit autrement, la surface inférieure de la tête 10a est la surface de la tête 10 orientée vers le pied 20, et la surface supérieure de la tête 10b est la surface de la tête 10 orientée opposée au pied 20. On définira par « axe radial » un axe compris dans un plan transverse à l'axe principal A et ayant pour origine l'axe principal A.

La tête 10 est responsable de la dissipation de chaleur provenant du deuxième élément 2. Pour réaliser cela, la tête 10 est munie d'une pluralité d'ailettes de refroidissement 11, ici cinq, s'étendant radialement depuis la surface extérieure du corps 10c de la tête 10. Le nombre d'ailettes 11 est généralement imposé par la dimension de la tête 10, selon l'axe principal A, et peut également dépendre de l'application visée. Les ailettes de refroidissement 11 sont transverses par rapport à l'axe principal A du dispositif de découplage thermique 100, c'est-à-dire qu'elles s'étendent parallèlement au plan (x,y) illustré sur les figures. Elles délimitent entre elles des zones de dissipation thermique. Ces zones de dissipation thermique sont avantageusement configurées pour laisser passer le plus d'air possible entre les ailettes 11.

De manière avantageuse, les ailettes de refroidissement 11 s'étendent continument sur tout le pourtour de la tête 10. De manière optionnelle, les ailettes de refroidissement 11 sont de forme oblongue, mais on peut tout à fait envisager une forme différente telle que circulaire, rectangulaire, etc. La surface supérieure 10a et la surface inférieure 10b de la tête 10 appartiennent chacune ici à une ailette de refroidissement 11 distincte. Plus particulièrement, la surface supérieure 10a de la tête 10 appartient ici à la première ailette 11a et la surface inférieure 10b appartient ici à la dernière ailette ou cinquième ailette.

Avantageusement, la tête 10 comprend également entre chaque ailette 11, au moins deux entretoises 12, soit une première et une deuxième entretoise, afin de maintenir un espace constant entre chaque ailette 11 et améliorer la résistance mécanique du dispositif de découplage thermique 100 aux tensions de couple. Les entretoises 12 permettent la reprise d'effort lors de l'assemblage, et plus particulièrement lors du vissage de la vis 3, qui sera décrit dans la suite de cette description, afin de répartir la tension d'assemblage et éviter qu'elle soit trop localisée. Les entretoises 12 sont avantageusement disposées de manière symétrique par rapport à l'axe principal A et sont également avantageusement disposées en bordure des ailettes 11. De manière également avantageuse, les premières et deuxièmes entretoises 12, disposées entre chaque ailette 11, sont respectivement alignées, selon l'axe principal A, avec les autres premières et deuxièmes entretoises 12 comme cela est bien visible sur les figures 3B et 4B. Bien évidemment, il est tout à fait envisageable d'avoir un nombre différent d'entretoises 12. On pourrait également envisager d'utiliser de ne pas utiliser le même nombre d'entretoises 12 entre chaque ailette 11. Il pourrait également être envisageable de ne pas avoir d'entretoise 12 entre deux ailettes 11 données.

De manière avantageuse, au moins une entretoise, comprise entre la première ailette 11a et la deuxième ailette 11b, directement située sous la première ailette 11a, est une entretoise renforcée 12' et possède une dimension latérale supérieure à celle des entretoises sous-jacentes. Par entretoises sous-jacentes on entend les entretoises disposées entre les autres ailettes, les autres ailettes étant situées sous la deuxième ailette. Par dimension latérale on entend selon un axe compris dans un plan transverse à l'axe principal A et perpendiculaire à un axe radial, il s'agit ici pour la figure 2B de l'axe y et de l'axe x pour les autres figures. En effet, les risques de déformation étant les plus importants au niveau de la surface supérieure 10a de la tête 10, et donc de la première ailette 11a, il est avantageux d'y renforcer la résistance à la déformation, notamment par l'accroissement en dimension des entretoises 12 dans son voisinage. Il est possible que toutes les entretoises 12 comprises entre la première et la deuxième ailette soient des entretoises renforcées 12', mais il est également envisageable que cela ne concerne qu'une partie d'entre elles, par exemple selon le nombre d'entretoises 12 et leur disposition.

De manière optionnelle, seule une portion de l'entretoise renforcée 12' peut présenter un élargissement. Il peut par exemple s'agir d'augmenter la dimension latérale de l'entretoise renforcée 12' uniquement sur une portion située le plus proche du bord de la deuxième ailette 11b.

De manière avantageuse, les entretoises renforcées 12' possèdent une dimension radiale supérieure à celle des entretoises sous-jacentes afin de placer une portion de l'entretoise renforcée 12' plus proche du bord ou au bord des ailettes 11 comme cela est représenté sur la partie droite de la figure 2B. Par dimension radiale on entend une dimension selon l'axe radial passant par l'entretoise, il s'agit ici de l'axe x pour la figure 2B et de l'axe y pour les autres figures.

De manière optionnelle, la dimension de la deuxième ailette 11b, en contact avec l'entretoise renforcée 12', peut être réduite en retirant la portion de l'ailette 11b existant entre l'extrémité de l'ailette 11b et l'entretoise renforcée 12', comme cela est visible sur la figure 4B, afin d'améliorer la résistance à la déformation de la tête 10.

La tête 10 comprend également entre chaque ailette 11, de manière avantageuse, au moins une nervure 13, et préférentiellement au moins deux nervures 13, s'étendant depuis le corps 10c, reliant chaque ailette 11 entre elles pour maintenir un espace constant entre chaque ailette 11 et améliorer la résistance mécanique du dispositif de découplage thermique 100 aux tensions de couple.

De manière avantageuse, les nervures 13 ont un profil incliné configuré pour que la dimension radiale de chaque nervure 13 augmente en se rapprochant de la surface supérieure 10a de la tête 10. Ainsi une nervure comprise entre la première et la deuxième ailette à une dimension radiale plus importante qu'une nervure 13 comprise entre la deuxième ailette 11b et une troisième ailette. En effet, il est d'autant plus important de renforcer la rigidité de la tête 10 que l'on se rapproche de sa surface supérieure 10 car les risques de déformation y sont importants lors de l'assemblage. De manière avantageuse, similairement aux entretoises 12, les nervures 13 entre chaque ailette sont alignées entre elles selon l'axe principal A. De manière optionnelle, on pourrait également envisager, similairement aux entretoises 12, d'avoir des rainures renforcées entre la première ailette 11a et la deuxième ailette 11b.

Les nervures 13 et les entretoises 12 sont optionnellement espacées angulairement entre elles de manière régulière. De manière également optionnelle, les nervures 13 et les entretoises 12 peuvent être disposées en alternance.

Dans le cas ici représenté sur les figures (hormis la figure 2B), il y a, entre chaque ailette 11, deux entretoises 12 et quatre nervures 13 réunies par paire (deux nervures 13 uniquement pour la figure 2B). Les paires de nervures 13 sont chacune disposées entre les deux entretoises 12, les entretoises 12 étant disposées le long du plus grand axe des ailettes 11 (axe x sur la figure 2B et axe y sur les autres figures), plus ou moins proches du bord des ailettes 11.

Le pied 20 est destiné à traverser l'ouverture du deuxième élément 2 et à fixer ce dernier au dispositif de découplage thermique 100. Il est responsable du clippage du dispositif de découplage thermique 100 sur le deuxième élément 2.

Le pied 20 comprend une paire de pattes flexibles 21 dont les extrémités libres sont orientées vers la tête 10. Les pattes flexibles 21 sont configurées pour se déformer lors de la traversée de l'ouverture du deuxième élément 2. L'extrémité libre venant en appui contre une surface inférieure du deuxième élément 2, à l'issue de la traversée de son ouverture, pour le fixer au dispositif de découplage thermique 100.

De manière avantageuse, chaque patte flexible 21 comprend un cran de pré-maintien 21' sur une surface extérieure. Par « surface extérieure » on entend une surface orientée vers l'extérieur du dispositif de découplage thermique 100, par opposition à une surface intérieure orientée vers le dispositif de découplage thermique 100. Les crans de pré-maintien 21' ont pour but de retenir le deuxième élément 2 assemblé au dispositif de découplage thermique 100 dans une position préassemblée. Dans cette position, le premier élément 1 n'est pas encore assemblé au dispositif de découplage thermique 100. Les crans de pré-maintien 21' viennent en butée contre le bord de l'ouverture du deuxième élément 2 si une force d'extraction selon l'axe principal A est appliquée.

De manière alternative, on pourrait utiliser tout autre type de pied existant pour ce domaine d'application, la tête 10 du dispositif 100 selon l'invention étant adaptable sur tout type de pied réalisant la même fonction de clippage. Le pied 20 peut par exemple comprendre des crans de pré-maintien supplémentaires, des pattes flexibles débouchant dans l'intérieur du pied, comme cela est représenté sur les figures 4A et 4B, ou non débouchant comme cela est représenté sur la figure 2B. Dans la suite de la description, on considérera un pied 20 correspondant au mode de réalisation représenté par les figures 4A et 4B.

Le logement interne 30 traverse le corps 10c de la tête 10 et débouche au niveau de la surface supérieure de la tête 10a. Le logement interne 30 est destiné à accueillir une vis 3 traversant l'ouverture du premier élément 1, pour fixer ce dernier au dispositif de découplage thermique 100. Le logement interne 30 s'étend jusqu'au voisinage de l'extrémité du pied 20. Le logement interne 30 peut déboucher sur l'extrémité du pied 20 comme cela est visible sur les figures 4A et 4B mais il est également envisageable qu'il ne soit pas débouchant.

De manière alternative, le logement interne 30 peut également être formé d'une partie principale située dans la tête 10 et d'une partie secondaire située dans le pied 20 comme cela est visible sur les figures 4A et 4B. Dans ce mode de réalisation, les deux parties du logement interne 30 sont reliées par le biais d'une ouverture (non visible sur les figures) formée dans une paroi qui sépare les deux parties, afin de permettre le passage de l'extrémité de la vis 3.

Le dispositif de découplage thermique 100 est avantageusement formé d'un matériau plastique résistant à des températures comprises entre 20° et 200°C, pour résister aux gammes de températures auxquelles il est soumis. Le matériau choisi peut par exemple être du Polyamide 6.6 chargé à 30% de fibre de verre (aussi appelé PA66 GF 30).

De manière également avantageuse, le dispositif de découplage thermique 100 est formé d'une seule pièce par injection thermoplastique.

### Mise en œuvre du dispositif de découplage thermique

Les figures 5A, 5B représentent les étapes d'assemblage du dispositif de découplage thermique 100 au premier 1 et deuxième élément 2.

La première étape, illustrée par la figure 5A, consiste à fixer le dispositif de découplage thermique 100 au deuxième élément 2. Pour cela l'extrémité du pied 20 est introduite dans l'ouverture du deuxième élément 2 et une force de pression est exercée sur la tête 10 pour clipper le pied 20. Lors de l'insertion du pied 20, les pattes flexibles 21 se rapprochent l'une de l'autre afin de traverser l'ouverture.

De manière optionnelle, il est envisageable d'avoir une étape intermédiaire de pré-assemblage du dispositif de découplage 100 au deuxième élément 2, dans lequel l'extrémité des pattes flexibles 21 n'a pas totalement traversée l'ouverture. Dans cette configuration, la surface inférieure du deuxième élément 2 vient en butée contre les crans de pré-maintien 21', tandis que l'extrémité des pattes flexibles 21 est toujours présente dans l'ouverture. Le dispositif de découplage 100 est alors retenu au deuxième élément 2.

Une fois la traversée réalisée, les pattes flexibles 21 reprennent leur écartement initial et la surface inférieure 10b de la tête 10 repose sur la surface supérieure du deuxième élément 2. Dans cette configuration, l'extrémité des pattes flexibles 21 est en butée contre la surface inférieure du deuxième élément 2 si l'on tente de retirer le dispositif de découplage 100 du deuxième élément 2. A l'issue de cette étape, le dispositif de découplage thermique 100 est donc maintenu fixé au deuxième élément 2.

La deuxième étape 2, illustrée par la figure 5B, consiste à fixer le premier élément 1 au dispositif de découplage thermique 100. Le premier élément 1 est disposé contre la surface supérieure 10a de la tête 10 de manière à aligner l'ouverture du premier élément 1 avec le logement interne 30. Une vis 3 est ensuite introduite à travers l'ouverture du premier élément 1 et vissée dans le logement interne 30. La vis 3 possède préférentiellement un filet en matériau tendre. Si la vis 3 est suffisamment longue, l'extrémité de la vis 3 pénètre dans la partie du logement interne 30 situé dans le pied 20 pour bloquer la déformation des pattes flexibles 21 en se plaçant entre elles.

A l'issue de cette étape, le premier élément 1 est maintenu fixé au dispositif de découplage thermique 100, le premier élément 1 étant coincé entre la surface supérieure 10a de la tête 10 et la vis 3. De manière optionnelle, une rondelle ou autre élément peut être disposé entre la vis 3 et le premier élément 1.

En fonctionnement, un dispositif de découplage thermique 100 conforme à l'invention permet d'atteindre un découplage thermique important entre le premier élément 1 et le deuxième élément 2.

Dans le cas où le deuxième élément 2 atteint une température de 160°C, qu'une distance de 10mm sépare les deux éléments entre eux avec un air ambiant à température 40°C, il est possible de ne pas dépasser les 48°C pour la température du premier élément 1.

Bien entendu l'invention n'est pas limitée aux modes de mise en œuvre décrits et on peut y apporter des variantes de réalisation sans sortir du cadre de l'invention tel que défini par les revendications.

Bien que l'on ait indiqué que la température du deuxième élément est plus importante que celle du premier élément, il est tout à fait possible d'avoir la situation inverse sans que cela n'impacte le fonctionnement et les performances du dispositif de découplage thermique.

Enfin, bien qu'ici les figures représentent essentiellement un type de pied, on rappelle que la tête du dispositif de découplage thermique peut être facilement adaptée pour fonctionner avec tout type de pied.

## Revendications

1. Dispositif de découplage thermique (100) entre un premier élément (1) et un deuxième élément (2) présentant une température différente de celle du premier élément (1), les deux éléments (1,2) étant chacun munis d'une ouverture, le dispositif de découplage thermique (100) comprenant :
- une tête (10) présentant une surface supérieure (10a) destinée à venir en contact contre le premier élément (1) et une surface inférieure (10b) destinée à venir en contact contre le deuxième élément (2), pour maintenir un espacement fixe entre le premier (1) et le deuxième élément (2) ;
- un pied (20) destiné à traverser l'ouverture du deuxième élément (2) et à fixer le dispositif de découplage thermique (100) au deuxième élément (2) ;
- un logement interne (30) débouchant au niveau de la surface supérieure (10a) de la tête (10), et destiné à accueillir une vis (3) traversant l'ouverture du premier élément (1), pour fixer le dispositif de découplage thermique (100) au premier élément (1) ;
le dispositif étant **caractérisé**
**en ce que** la tête (10) est munie, entre sa surface supérieure (10a) et sa surface inférieure (10b), d'une pluralité d'ailettes de refroidissement (11) transverses par rapport à un axe principal (A) du dispositif de découplage thermique (100), la pluralité d'ailettes (11) délimitant entre elles des zones de dissipation thermique.

2. Dispositif de découplage thermique (100) selon la revendication précédente dans lequel chaque ailette de refroidissement (11) s'étend continument sur tout le pourtour de la tête (10).

3. Dispositif de découplage thermique (100) selon l'une des revendications précédentes dans lequel le pied (20) comprend une paire de pattes flexibles (21), dont les extrémités libres sont orientées vers la tête (10), chaque patte (21) étant configurée pour se déformer lors de la traversée de l'ouverture du deuxième élément (2), l'extrémité libre de chaque patte flexible (21) venant en appui contre une surface inférieure du deuxième élément (2), après la traversée de l'ouverture du deuxième élément (2), pour le fixer au dispositif de découplage thermique (100) .

4. Dispositif de découplage thermique (100) selon l'une des revendications précédentes dans lequel la tête (10) comprend au moins deux entretoises (12) disposées entre chaque ailette (11).

5. Dispositif de découplage thermique (100) selon la revendication précédente dans lequel les entretoises (12), entre chaque ailette (11), sont disposées de manière symétrique par rapport à l'axe principal (A).

6. Dispositif de découplage thermique (100) selon l'une des revendications 4 à 5 dans lequel la surface supérieure (10a) de la tête (10) appartient à une première ailette (11a) et dans lequel au moins une entretoise (12), comprise entre la première ailette (11a) et une deuxième ailette (11b) directement située sous la première ailette (11a), est une entretoise renforcée (12') et possède une dimension latérale supérieure à celle des entretoises (12) sous-jacentes.

7. Dispositif de découplage thermique (100) selon la revendication précédente dans lequel l'entretoise renforcée (12') possède une dimension radiale supérieure à celle des entretoises (12) sous-jacentes.

8. Dispositif de découplage thermique (100) selon l'une des revendications précédentes dans lequel la tête (10) comprend au moins une nervure (13) disposée entre chaque ailette (11).

9. Dispositif de découplage thermique (100) selon la revendication précédente dans lequel les nervures (13) ont un profil incliné configuré pour que la dimension radiale des nervures (13) augmente en se rapprochant de la surface supérieure (10a) de la tête (10).

10. Dispositif de découplage thermique (100) selon l'une des revendications précédentes dans lequel le dispositif de découplage thermique (100) est formé d'un matériau plastique résistant à des températures comprises entre 20° et 200°C.

## Patentansprüche

1. Vorrichtung (100) für thermische Entkopplung zwischen einem ersten Element (1) und einem zweiten Element (2), das eine andere Temperatur als diejenige des ersten Elements (1) aufweist, wobei die zwei Elemente (1,2) jeweils mit einer Öffnung versehen sind, die Vorrichtung (100) für thermische Entkopplung umfassend:
- einen Kopf (10), der eine obere Oberfläche (10a), die dafür bestimmt ist, mit dem ersten Element (1) in Kontakt zu kommen, und eine untere Oberfläche (10b) aufweist, die dafür bestimmt ist, mit dem zweiten Element (2) in Kontakt zu kommen, zum Aufrechterhalten eines festen Abstands zwischen dem ersten (1) und dem zweiten Element (2);
- einen Fuß (20), der dafür bestimmt ist, durch die Öffnung des zweiten Elements (2) hindurchzugehen und die Vorrichtung (100) für thermische Entkopplung an dem zweiten Element (2) zu befestigen;
- eine innere Einsenkung (30), die in die obere Oberfläche (10a) des Kopfes (10) mündet und dafür bestimmt ist, eine Schraube (3), die durch die Öffnung des ersten Elements (1) hindurchgeht, zum Befestigen der Vorrichtung (100) für thermische Entkopplung an dem ersten Element (1) aufzunehmen;
wobei die Vorrichtung **dadurch gekennzeichnet ist, dass** der Kopf (10) zwischen seiner oberen Oberfläche (10a) und seiner unteren Oberfläche (10b) mit einer Vielzahl von Kühlrippen (11) versehen ist, die quer zu einer Hauptachse (A) der Vorrichtung (100) für thermische Entkopplung sind, wobei die Vielzahl von Rippen (11) Wärmeableitungsbereiche untereinander begrenzen.

2. Vorrichtung (100) für thermische Entkopplung nach dem vorstehenden Anspruch, wobei sich jede Kühlrippe (11) durchgehend über den gesamten Umfang des Kopfes (10) erstreckt.

3. Vorrichtung (100) für thermische Entkopplung nach einem der vorstehenden Ansprüche, wobei der Fuß (20) ein Paar von biegsamen Laschen (21) umfasst, deren freie Enden in Richtung des Kopfes (10) ausgerichtet sind, wobei jede Lasche (21) konfiguriert ist, um sich bei dem Hindurchgehen durch die Öffnung des zweiten Elements (2) zu verformen, wobei das freie Ende jeder biegsamen Lasche (21) gegen eine untere Oberfläche des zweiten Elements (2) zum Anliegen kommt, nachdem sie durch die Öffnung des zweiten Elements (2) hindurchgegangen ist, um es an der Vorrichtung (100) für thermische Entkopplung zu befestigen.

4. Vorrichtung (100) für thermische Entkopplung nach einem der vorstehenden Ansprüche, wobei der Kopf (10) mindestens zwei Abstandshalter (12) umfasst, die zwischen jeder Rippe (11) angeordnet sind.

5. Vorrichtung (100) für thermische Entkopplung nach dem vorstehenden Anspruch, wobei die Abstandshalter (12) zwischen jeder Rippe (11) zu der Hauptachse (A) symmetrisch angeordnet sind.

6. Vorrichtung (100) für thermische Entkopplung nach einem der Ansprüche 4 bis 5, wobei die obere Oberfläche (10a) des Kopfes (10) zu einer ersten Rippe (11a) gehört und wobei mindestens ein Abstandshalter (12) zwischen der ersten Rippe (11a) und einer zweiten Rippe (11b), die direkt unter der ersten Rippe (11a) gelegen ist, ein verstärkter Abstandshalter (12') ist und über eine seitliche Abmessung verfügt, die größer als diejenige der darunterliegenden Abstandshalter (12) ist.

7. Vorrichtung (100) für thermische Entkopplung nach dem vorstehenden Anspruch, wobei der verstärkte Abstandshalter (12') über eine radiale Abmessung verfügt, die größer als diejenige der darunterliegenden Abstandshalter (12) ist.

8. Vorrichtung (100) für thermische Entkopplung nach einem der vorstehenden Ansprüche, wobei der Kopf (10) mindestens eine Verstärkungsrippe (13) umfasst, die zwischen jeder Rippe (11) angeordnet ist.

9. Vorrichtung (100) für thermische Entkopplung nach dem vorstehenden Anspruch, wobei die Verstärkungsrippen (13) ein geneigtes Profil besitzen, das konfiguriert ist, damit die radiale Abmessung der Verstärkungsrippen (13) zunimmt, wenn sie sich der oberen Oberfläche (10a) des Kopfes (10) nähern.

10. Vorrichtung (100) für thermische Entkopplung nach einem der vorstehenden Ansprüche, wobei die Vorrichtung (100) für thermische Entkopplung aus einem Kunststoffmaterial ausgebildet ist, das zwischen 20° und 200 °C temperaturbeständig ist.

## Claims

1. Thermal decoupling device (100) between a first element (1) and a second element (2) that has a temperature different from that of the first element (1), the two elements (1, 2) each being provided with an opening, the thermal decoupling device (100) comprising:
- a head (10) having an upper surface (10a) intended to come into contact with the first element (1) and a lower surface (10b) intended to come into contact with the second element (2) in order to maintain a fixed spacing between the first element (1) and the second element (2);
- a foot (20) intended to pass through the opening of the second element (2) and secure the thermal decoupling device (100) to the second element (2);
- an inner housing (30) which opens at the upper surface (10a) of the head (10) and is intended to receive a screw (3) that passes through the opening of the first element (1) in order to secure the thermal decoupling device (100) to the first element (1);
the device being **characterized in that** the head (10) is provided, between its upper surface (10a) and its lower surface (10b), with a plurality of cooling fins (11) which are transverse with respect to a main axis (A) of the thermal decoupling device (100), the plurality of fins (11) delimiting heat dissipation zones between them.

2. Thermal decoupling device (100) according to the preceding claim, wherein each cooling fin (11) extends continuously over the entire circumference of the head (10).

3. Thermal decoupling device (100) according to either of the preceding claims, wherein the foot (20) comprises a pair of flexible tabs (21) of which the free ends are oriented toward the head (10), each tab (21) being configured to deform when passing through the opening of the second element (2), the free end of each flexible tab (21) bearing against a lower surface of the second element (2) after passing through the opening of the second element (2) in order to secure said second element to the thermal decoupling device (100).

4. Thermal decoupling device (100) according to any of the preceding claims, wherein the head (10) comprises at least two spacers (12) arranged between each fin (11).

5. Thermal decoupling device (100) according to the preceding claim, wherein the spacers (12) between each fin (11) are arranged symmetrically with respect to the main axis (A).

6. Thermal decoupling device (100) according to either of claims 4 to 5, wherein the upper surface (10a) of the head (10) belongs to a first fin (11a) and wherein at least one spacer (12) between the first fin (11a) and a second fin (11b) located directly below the first fin (11a) is a reinforced spacer (12') and has a lateral dimension greater than that of the underlying spacers (12).

7. Thermal decoupling device (100) according to the preceding claim, wherein the reinforced spacer (12') has a radial dimension greater than that of the underlying spacers (12).

8. Thermal decoupling device (100) according to any of the preceding claims, wherein the head (10) comprises at least one rib (13) arranged between each fin (11).

9. Thermal decoupling device (100) according to the preceding claim, wherein the ribs (13) have an inclined profile configured so that the radial dimension of the ribs (13) increases as it approaches the upper surface (10a) of the head (10).

10. Thermal decoupling device (100) according to any of the preceding claims, wherein the thermal decoupling device (100) is formed of a plastic material resistant to temperatures of between 20° and 200°C.
